# EUROPEAN PATENT APPLICATION

(11) **EP 4 616 699 A1**
(43) Date of publication of application: **17.09.2025**
(21) Application number: 22822619.7
(22) Date of filing: 10.11.2022
(51) Int. Cl.: A01D 45/26

(54) **BROCCOLI HARVESTER**

(71) Applicant: Componosollertia, S.A.L., 31500 Tudela (Navarra) (ES)
(72) Inventor: HUERTA MONEO, Francisco Jose, 31500 TUDELA (NAVARRA) (ES); SÁNCHEZ CASTRO, Mario, 31500 TUDELA (NAVARRA) (ES); COMÍN ESCARTÍN, Ricardo Ezequiel, 31500 TUDELA (NAVARRA) (ES)
(74) Representative: González López-Menchero, Álvaro Luis
(86) International application number: PCT/ES2022/070722
(87) International publication number: WO 2024/100308

(57) **Abstract**

The invention relates to a broccoli harvester which is connectable to a tractor (2) for the transport and drive of the harvester, comprising:
- A broccoli harvesting and stem-cutting comb subsystem (4), comprising at least a pair of conical centring struts (7) incorporating means for making a first cut and a second cut, as well as means for positioning the broccoli and both globally and individually adjusting the cutting height.
- A transfer subsystem (5) for transfer to a transverse conveying subsystem, which also has means for broccoli-leaf separation.
- The transverse conveying and transfer subsystem (6) for transfer to a cleaning subsystem.
- The cleaning subsystem provides mobile transfer to the broccoli unloading point.

In harvesting it allows for an efficient and automated cutting of the broccoli flower with respect to the stem.

## Description

### OBJECT OF THE INVENTION

The object of the present invention, as stated by the title of the invention, is a broccoli harvester to harvest broccoli in fields, characterized in that the harvester is adaptable to a traction machine, such as a tractor, so that it is moved and driven by the moving and drive means with which the tractor is provided, with the aim of reducing both the cost of labour and the difficulty of manual harvesting work.

The present invention is characterized by the special features of the elements and parts of which it is made up, including height-adjustable combs, a stem-cutting control system, as well as leaf removal and conveying systems.

The system is applicable to all broccoli farms that have a minimum distance between planting rows and can incorporate from one to six harvesting combs.

Therefore, the present invention lies within the field of machinery used for the harvesting of plants of the Brassicaceae family.

### BACKGROUND OF THE INVENTION

Broccoli harvesting requires a large number of people working in really tough conditions, due to the type of work and the usual weather conditions.

However, it is increasingly difficult to find personnel to carry out this type of work, which is detrimental to broccoli harvesting and leads to a reduction in the future consumption of a superfood such as broccoli. Other machinery has been used in attempts to overcome these drawbacks, however the effective separation of the flower from the stem and leaves in an efficient and automated way has not been achieved.

So far, this situation has been approached by carrying out work in precarious conditions, along with an increase in the price of the final product. However, if this process could be automated, broccoli farming could be extended without detriment to either the farmer or the subsequent industrial processor, benefiting the entire population.

Therefore, the object of the present invention is to overcome the aforementioned drawbacks of lack of efficiency and automation in the tasks of cutting the flower with respect to the stem and leaf removal by developing a machine such as the one described below, the essence of which is described in the first claim.

### DESCRIPTION OF THE INVENTION

The object of the present invention is to define a machine for harvesting broccoli in fields, with the aim of separating the flower from the stem and leaf, depositing the flower in one place to be delivered to the processor and depositing the stem and leaf in the field, comprising the following subsystems arranged one after the other:
- A broccoli harvesting and stem-cutting comb subsystem, comprising at least one pair of conical centring struts incorporating means for making a first cut and a second cut, as well as means for positioning the broccoli and adjusting the cutting height, both globally of the entire comb or individually of each pair of conical centring struts.
- Means for lifting and lowering the broccoli between the means for making the first cut and the means for making the second cut.
- A transfer subsystem for transferring to a transverse conveying subsystem, which also has means for broccoli leaf separation.
- The transverse conveying and transfer subsystem for transferring to a cleaning subsystem.
- The cleaning subsystem provides mobile transfer to the broccoli unloading point.
- Connection points from the broccoli machine to a tractor in a way that allows for the connection and transmission of the drive from the tractor to the harvesting machine.

Additionally, and in a complementary way, it can have a GPS subsystem for machine tracking and work data collection.

All of the previous subsystems make up an integrated unit that can be connected to a tractor machine or to a tractor and powered by the same by means of mechanical and hydraulic elements arranged both at the rear and at the front of the tractor, all of which can be transported so that the broccoli harvester is driven and transported by the tractor to which it can be connected.

The plant harvesting and stem-cutting subsystem comprises at least a pair of conical centring struts between which a space is defined that closes over the plants as the machine moves forward until they reach geared drag chains. These chains are arranged in a closed circuit on each of the supports of the conical struts.

This stem-cutting subsystem comprises means for making a first stem cut and second means for making a second stem cut.

The first cut of the stem is made by means of a double set of partially overlapping discs arranged below the plane defined by the drag chains, wherein one of the discs is a smooth disc, while the second disc is a toothed disc; the second cut is made by means of an upper disc arranged above the plane defined by the drag chains and close to the outlet of the plants.

The number of pairs of conical centring struts can be as many as necessary, and the comb can have a global actuator for height adjustment of all pairs of conical struts, or each pair of conical struts can have individual means for adjusting the height of the struts with respect to the ground.

After the comb subsystem, formed by at least one pair of conical centring struts, there are at least two leaf-collecting rollers with the function of collecting any leaves that remain attached to the broccoli, after which the transfer subsystem is arranged.

**The** transfer subsystem for transfer to a transverse conveying and leaf and flower separation subsystem, is based on a rod conveyor comprising a conveyor belt arranged in a closed circuit and provided with a series of evenly distributed pusher plates, thereby defining on the conveyor belt a lifting zone for the cut plants, which fall onto an outgoing conveyor belt of the transverse conveying subsystem.

**The** transverse conveying subsystem for transfer to a cleaning belt consists of a conveyor belt that conveys the cut plants and has blowing devices at the end of the conveyor belt.

The cleaning and mobile transfer subsystem for mobile transfer to the flower unloading point consists of a belt positioned transversely to the lifting belt, which in one possible embodiment consists of a first belt followed by a second conveyor belt that can be rotated to orient the flower outlet.

Annexed to the manual review subsystem may be an observation and control structure.

The broccoli harvester object of the invention, as indicated above, is connectable with traction means, such as a tractor which has the function of carrying out the transmission of the drive to the harvester. In the tractor or traction means used, control means can be arranged, which in a preferable but nonlimiting embodiment, could consist of a camera for viewing the front of the tractor, to verify how the harvesting takes place, and, associated with said camera, a screen can be arranged which can be used to view the images captured by the camera, and it can also have a joystick or control lever that allows one to regulate the harvesting machine, such as the height adjustment of the entire comb or of each pair of conical centring struts or the height of the second cut.

Thanks to the characteristics described above, a machine for harvesting broccoli is obtained in an automated way, wherein it is possible to regulate the height of the cut on the stem of the plant, and wherein it is also possible to remove the leaves from the flower, and a subsequent blowing is also performed to clean any remaining leaves, in addition to being able to orient the outlet of the plants, all which is done with practically no human intervention in an automatic and efficient way.

Throughout the description and claims the word "comprises" and variants thereof are not intended to exclude other technical features, additions, components or steps. For those skilled in the art, other objects, advantages and features of the invention will be apparent in part from the description and in part from the practice of the invention.

### EXPLANATION OF THE FIGURES

To complement the description made and in order to aid in a better understanding of the features of the invention, in accordance with a preferred practical embodiment thereof, as an integral part of said description, attached is a set of drawings wherein, with an illustrative and non-limiting character, the following has been represented.
Figure 1 shows a plan view of a broccoli harvester object of the invention attached to a tractor.
Figure 2 shows a side view of the aforementioned machine.
Figure 3 shows a plan view of the broccoli harvester connected to a tractor wherein one can see the connection and transmission points of a tractor on the harvesting machine object of the application.
Figure 4 shows a plan view of a pair of conical struts.
Figure 5 shows a bottom view of a pair of conical struts.
Figures 5A and 5B show two different positions of lifting or lowering means with respect to the second cutting discs.
Figures 6 and 7 show two different positions of the comb subsystem depending on the actuation of actuator which controls the overall comb height.
Figures 8 and 9 show two different heights of conical struts depending on an individual height adjuster.
Figure 10 shows a weight compensating piston.
Figure 11 shows a side view of the comb, as well as the pushing means and leaf-collecting means before transferring the plant to a rod conveyor.
Figure 12 shows a plan view of the comb and rod conveyor.
Figure 13 shows a cross-sectional front view of the rod conveyor.
Figure 14 shows a perspective view of the inside of the rod conveyor.
Figure 15 shows a plan view of the transverse conveying and transfer subsystem in connection with the manual review subsystem for mobile transfer to the flower unloading point.
Figure 16 shows the second non-essential and redundant system for leaf removal.
Figure 17 shows the observation and control platform attached to the manual review and mobile transfer subsystem for transfer to the flower unloading point.

### PREFERRED EMBODIMENT OF THE INVENTION

In view of the figures, a preferred embodiment of the proposed invention is described below.

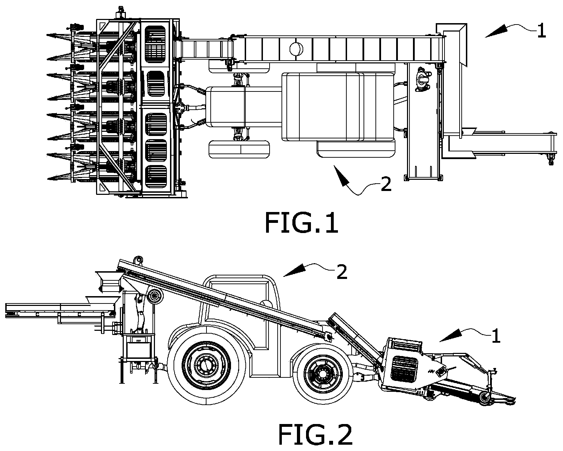

In figures 1 and 2 we can see a broccoli harvester (1), such as the one that is the object of the invention, attached to a tractor (2) for transport and drive.

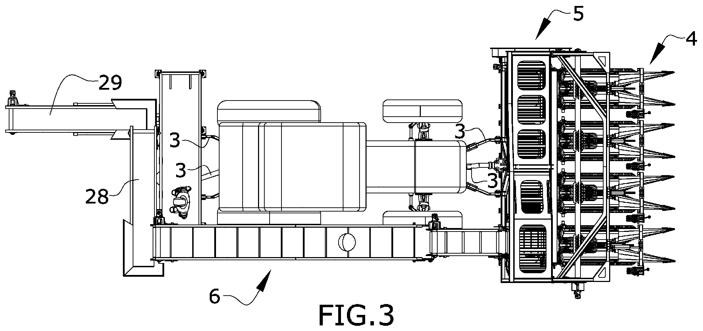

Figure 3 shows:
- A comb subsystem (4) for broccoli harvesting and stem-cutting, comprising at least a pair of conical centring struts (7) incorporating means for making a first cut and a second cut, as well as means for positioning the broccoli and adjusting the cutting height, both globally of the whole comb or individually for each pair of conical centring struts (7).
- A transfer subsystem (5) for transfer to a transverse conveying subsystem, which also has means for broccoli leaf separation.
- The transverse conveying and transfer subsystem (6) for transfer to a cleaning subsystem.
- The cleaning subsystem provides mobile transfer to the broccoli unloading point.
- Connection points (3) of the broccoli machine to a tractor (2), in such a way to enable the connection and transmission of the drive from the tractor to the harvesting machine.

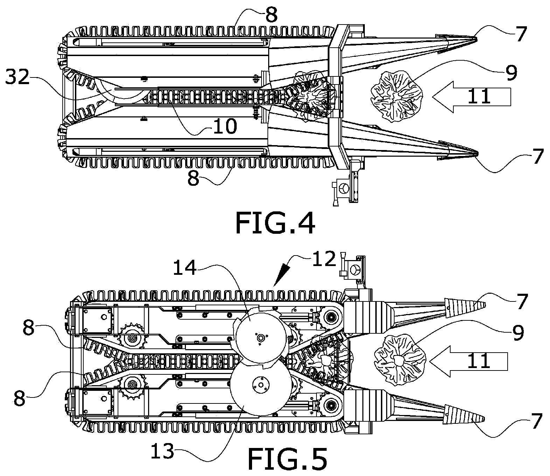

Figure 4 shows the comb subsystem (4), in particular a pair of conical centring struts (7), wherein on the support of each conical centring strut (7) a drag chain (8) is arranged, such that the convergent space (11) defined between each pair of conical centring struts (7) converges in a gear area (10) of the drag chains (8) of each conical centring strut (7), so that the drag chains (8) hold and advance each piece of broccoli (9), making a first cut and a second cut.

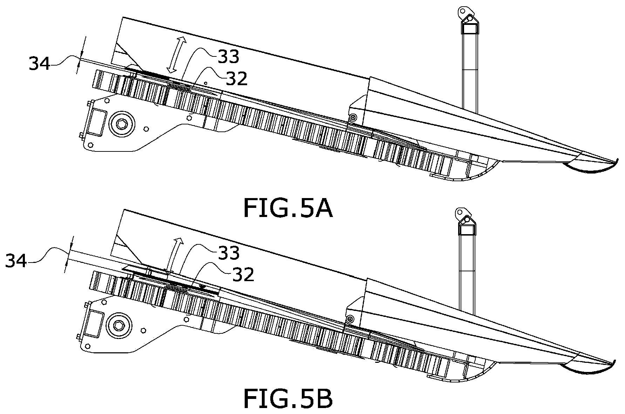

The first cut is carried out by a first set of cutting discs (12) comprising a first smooth disc (13) and a second toothed disc (14) (figure 5) both positioned in a partially overlapping manner and under the drag chains, while the second cut is carried out by a cutting disc (32) positioned close to the outlet of the gear mesh point of the drag chains (8).

Figures 5A and 5B show that between the first set of cutting discs (14) and the means for making the second cut the harvester is provided with means for lifting and lowering (33) the broccoli with respect to the means for making the second cut, specifically with respect to the cutting disc (32).

The lifting and lowering means of the broccoli allow the cutting to be carried out at different distances on the trunk. Figure 5A shows how the distance (34) between the lifting ramp and the cutting disc (32) is practically zero, while in figure 5B there is a spacing and vertical lifting of the broccoli so that the distance (34) between the lifting ramp and the cutting disc (32) is clearly greater.

These lifting and lowering means can be manual or automatic.

The comb subsystem (4) has height adjustment means, specifically two, including first height adjustment means for the entire comb, while the second height adjustment means are for each pair of conical centring struts (7).

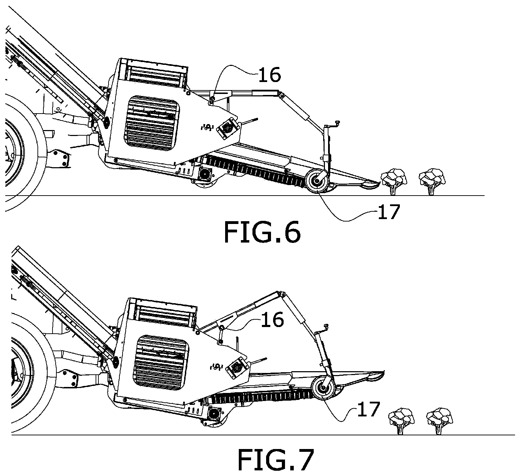

The first height adjustment means (7) in one possible embodiment are carried out by means of a height adjustment actuator (16), which, as can be seen in figures 6 and 7, achieve a higher or lower elevation of the comb subsystem (4) with respect to the ground, depending on the position of the actuator.

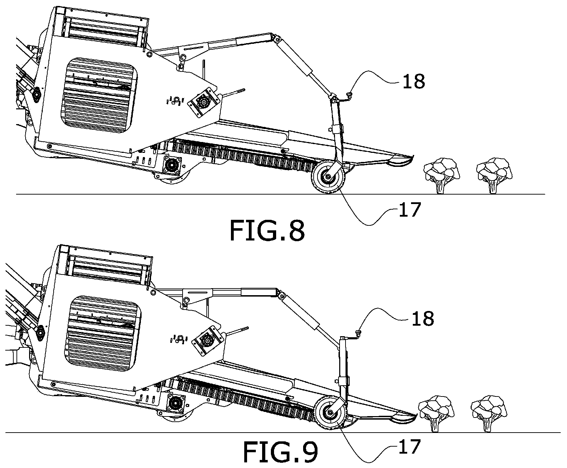

The second height adjustment means (8) in the embodiment shown consist of an individual adjuster (18) mounted on the support axle of a wheel (17) which lifts or lowers each pair of conical centring struts (7) with respect to the wheel (17), as can be seen in figures 8 and 9.

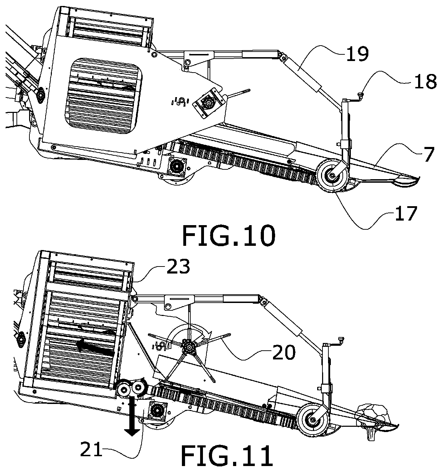

In a complimentary way, the comb subsystem (4) can be equipped with a weight compensating system (19) (figure 10) that individually releases the weight of each pair of conical centring struts (7), which allows for a more delicate treatment of the plants during harvesting, compensating for the unevenness of the ground.

Once the plants have been cut and at the end of the comb subsystem (4), a rotational pusher (20) advances the cut broccoli to leaf-collecting means, consisting of adjacent rollers (21) that can rotate in the same direction or in opposite directions, which are responsible for collecting the leaves that may remain and advancing the cut broccoli to a rod conveyor (23), as shown in figure 11.

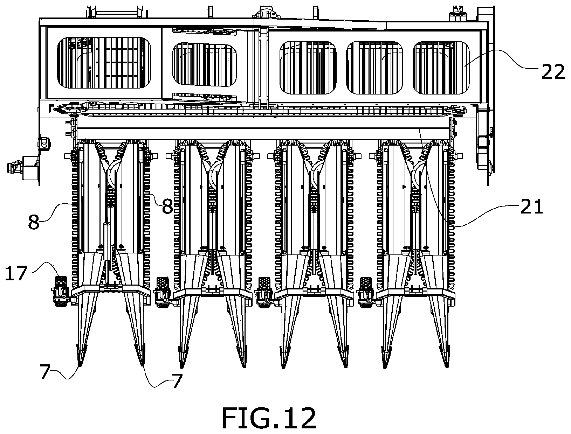

Figure 12 shows a plan view of the comb subsystem made up of four pairs of conical centring struts (7), and the transverse conveying and leaf and flower separation subsystem, formed by the rod conveyor (23) and the rollers (21).

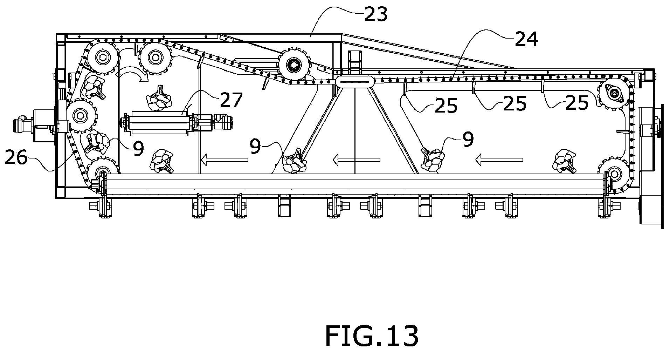

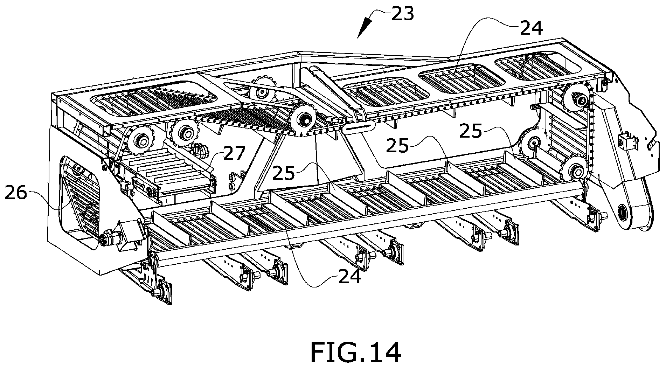

Figures 13 and 14 show that the rod conveyor (23) comprises a closed-circuit belt (24) provided with a series of spaced apart separators (25), having a lifting zone (26) that makes the cut and de-leafed broccoli (9) pass to an outgoing transverse belt (27).

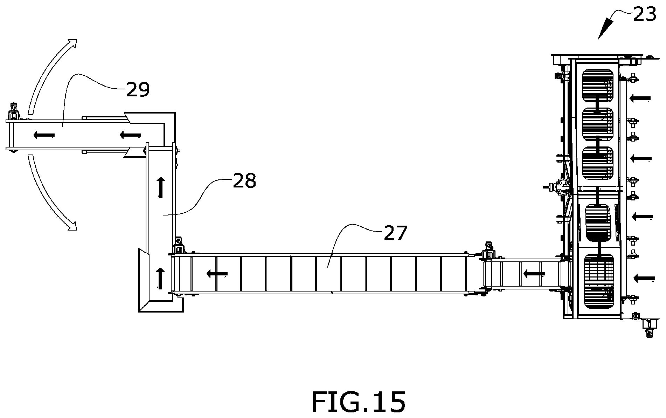

Figure 15 shows the outgoing transverse belt (27) which is in connection with the manual review and mobile transfer subsystem for transfer to the flower unloading point, which is formed by a first outgoing belt (28) and a second outgoing belt, rotatable (29) with respect to the first outgoing belt (28) and arranged downstream of the first outgoing belt (28), as shown in the figure.

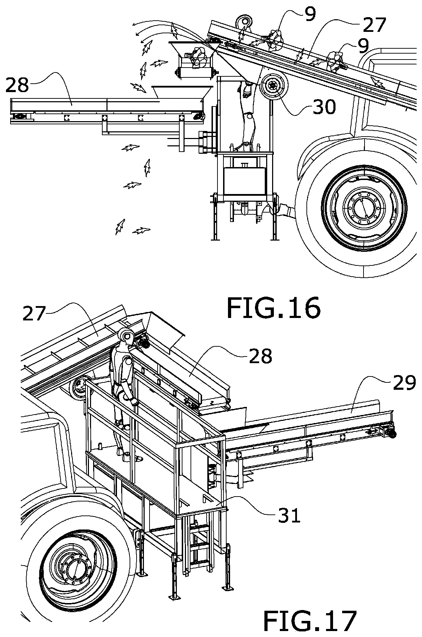

Figure 16 shows how at the end of the outgoing transverse belt (27) there is a leaf-blower fan (30), equipped with a speed regulator so that the leaves with lower density are ejected from the conveyor belt.

Lastly, figure 17 shows that adjacent to the manual review and mobile transfer subsystem for transfer to the unloading point, there is an observation and control platform (31).

Having sufficiently described the nature of the present invention, as well as the manner of putting it into practice, it is hereby stated that, within its essence, it may be put into practice in other embodiments which differ in detail from the one herein shown by way of example, and to which the protection claimed will also apply, provided that it does not alter, change or modify the fundamental principle thereof.

## Claims

1. A broccoli harvester connectable to a tractor (2) for the transport and drive of the harvester, **characterized in that** the harvester comprises:
- A broccoli harvesting and stem-cutting comb subsystem (4), comprising at least a pair of conical centring struts (7) incorporating means for making a first cut and a second cut, as well as means for positioning the broccoli and adjusting the cutting height both globally of the entire comb and individually of each pair of conical centring struts (7),
- Broccoli lifting and lowering means (33) positioned between the means for making the first cut and the means for making the second cut,
- A transfer subsystem (5) for transfer to a transverse conveying subsystem, which also has broccoli leaf separation means.
- The transverse conveying and transfer subsystem (6) for transfer to a cleaning subsystem
- The cleaning subsystem provides mobile transfer to the broccoli unloading point.
- Connection points (3) from the broccoli machine to a tractor (2) in such a way to enable the connection and transmission of the drive from the tractor to the harvesting machine.

2. The broccoli harvester according to claim 1, **characterized in that** each conical centring strut (7) has a support wherein a drag chain (8) is arranged, so that the convergent space (11) defined between each pair of conical centring struts (7) converges in a gear area (10) of the drag chains (8) of each conical centring strut (7), so that the drag chains (8) hold and advance each piece of broccoli (9).

3. The broccoli harvester according to claims 1 or 2, **characterized in that** the first cut is carried out by means of a first set of cutting discs (12) comprising a first smooth disc (13) and a second toothed disc (14) both positioned in a partially overlapping manner and both positioned under the drag chains (8), while the second cut is carried out by means of a cutting disc (32) positioned close to the outlet of the gear mesh point of the driving chains (8).

4. The broccoli harvester according to claims 1 or 2 or 3, **characterized in that** the means for adjusting the overall cutting height of the whole comb comprise a height adjustment actuator (16).

5. The broccoli harvester according to any of the previous claims, **characterized in that** the means for individually adjusting the cutting height of each pair of conical centring struts (7) comprise an individual adjuster (18) mounted on the support axle of a wheel (17) which lifts or lowers each pair of conical centring struts (7) with respect to the wheel (17).

6. The broccoli harvester according to any of the previous claims, **characterized in that** the comb subsystem (4) comprises a weight compensating system (19) that individually releases the weight of each pair of conical centring struts (7).

7. The broccoli harvester according to any of the previous claims, **characterized in that** at the end of the comb subsystem (4) there is a rotational pusher (20) that advances the cut broccoli to a leaf collector consisting of adjacent rollers (21) that can rotate in the same direction or in the opposite direction.

8. The broccoli harvester according to claim 7, **characterized in that** the transfer subsystem (5) comprises a rod conveyor (23) having a conveyor belt arranged in a closed circuit (24) provided with a series of separators (25) spaced apart from each other, having a lifting zone (26) that makes the cut and de-leafed broccoli (9) pass to an outgoing transverse conveyor.

9. The broccoli harvester according to any of the previous claims, **characterized in that** the transverse conveying and transfer subsystem (6) for transfer to a cleaning belt comprises an outgoing transverse belt (27) at the end of which there is a leaf-blower fan (30) provided with a speed regulator.

10. The broccoli harvester according to any of the previous claims, **characterized in that** the cleaning and mobile transfer subsystem for transfer to the flower unloading point is formed by a first outgoing belt (28) and a second outgoing belt, rotatable (29) with respect to the first outgoing belt (28) and arranged downstream of the first outgoing belt (28).

11. The broccoli harvester according to any of the previous claims, **characterized in that** adjacent to the manual review and mobile transfer subsystem for transfer to the unloading point, there is an observation and control platform (31).

12. The broccoli harvester according to any of the previous claims, **characterized in that** it includes a GPS subsystem for machine tracking and work data collection.
